# EUROPÄISCHE PATENTSCHRIFT

(11) **EP 1 002 260 B1**
(45) Veröffentlichungstag und Bekanntmachung des Hinweises auf die Patenterteilung: **09.10.2002**
(21) Anmeldenummer: 98945065.5
(22) Anmeldetag: 29.07.1998
(51) Int. Cl.: G05B 19/00

(54) **REGLER MIT ZEITDISKRETEN, DYNAMISCHEN FUZZY-REGELGLIEDERN**
CONTROL UNIT COMPRISING DYNAMIC FUZZY LOGIC CONTROL ELEMENTS, TEMPORALLY DISCRETE
REGULATEUR COMPRENANT DES ELEMENTS DE REGULATION A LOGIQUE FLOUE DYNAMIQUES, TEMPORELLEMENT DISCRETS

(30) Priorität: 11.08.1997 DE 19734711
(43) Veröffentlichungstag der Anmeldung: 24.05.2000
(73) Patentinhaber: SIEMENS AKTIENGESELLSCHAFT, 80333 München (DE)
(72) Erfinder: ADAMY, Jürgen, D-91338 Igensdorf (DE); YOUSIF, Amin, D-27578 Bremerhaven (DE)
(86) Internationale Anmeldenummer: DE9802163
(87) Internationale Veröffentlichungsnummer: WO99008163

(56) Entgegenhaltungen:
- DE-A- 4 420 800
- US-A- 5 272 621

## Beschreibung

In herkömmlichen Reglern als Regelglied eingesetzte Fuzzy-Systeme sind statische Systeme und verfügen als solche nicht über dynamische Übertragungseigenschaften. Sie weisen deshalb die Eigenschaften von nichtlinearen, statischen Übertragungsgliedern auf.

Um dynamische Regeleigenschaften eines Fuzzy-Reglers zu realisieren, ist es bekannt, statische Fuzzy-Systeme mit herkömmlichen, linearen Dynamik-Regelgliedern zu kombinieren. Derartige lineare Dynamik-Regelglieder weisen insbesondere eine integrierende, differenzierende oder proportionale Übertragungscharakteristik oder auch beliebige Kombinationen davon auf. Beispielsweise werden derartige lineare Dynamik-Regelglieder auch als sogenannte I-, D-, P-, PI-, PD- oder PID-Regelglieder bezeichnet.

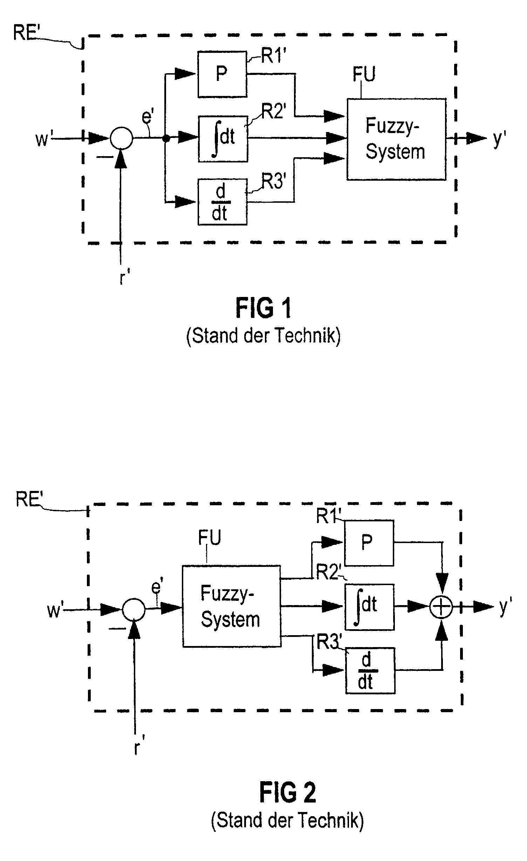

Wie in den Figuren 1 und 2 dargestellt, ist es bekannt, bei einem Regler RE' lineare Dynamik-Regelglieder mit einer integrierenden, differenzierenden und/oder proportionalen Übertragungscharakteristik entweder vor, wie in der Figur 1 dargestellt ist, oder auch einem statisches Fuzzy-System-Regelglied FU nachzuschalten, wie in der Figur 2 dargestellt. In den Figuren 1 und 2 sind jeweils beispielhaft ein lineares Dynamik-Regelglied R1' mit proportionaler, ein lineares Dynamik-Regelglied R2' mit integrierender und ein lineares Dynamik-Regelglied R3' mit differenzierender Übertragungscharakteristik dargestellt. Die in den Figuren 1 und 2 dargestellten, bekannten Regler RE' mit Fuzzy-Eigenschaften weisen durch die linearen Dynamik-Regelglieder R1' bis R3' insbesondere die dynamischen Eigenschaften eines sogenannten PID-Reglers auf.

Aus Koch, Mario u. a. Fuzzy-Control, R. Oldenbourg Verlag GmbH, München, 1996, Seiten 29-32 und 249-266 ist es bekannt, zur Erzeugung dynamischer Übertragungseigenschaften, einem Regler mit integrierenden und/oder differenzierenden Übertragungseigenschaften ein Fuzzy-System vor-oder nachzuschalten.

Die in den Figuren 1 und 2 beispielhaft dargestellten, bekannten Regler RE' weisen in der Regel eine Führungsgröße w', insbesondere zur Vorgabe eines Regelsollwertes und eine Rückführgröße r' auf. Die Rückführgröße r' wird dabei im Regler RE' von der Führungsgröße w' subtrahiert und als Regeldifferenz e' = w'-r' den Regelgliedern R1' bis R3' bzw. dem Fuzzy-System-Regelglied FU zugeführt. Deren Ausgangsgrößen, d.h. der Regelglieder R1' bis R3' bzw. des Fuzzy-System-Regelglieds FU, sind im Regler RE' zusammengeführt und dienen als Ausgangsgröße y' des Reglers RE' insbesondere zur Regelung eines technischen Prozesses, von dem die Rückführgröße r' insbesondere als sogenannter Regelistwert zurück zum Regler RE' geführt ist.

Nachteilig ist es, daß den herkömmlichen Reglern mit Fuzzy-Eigenschaften die Kombination von zwei unterschiedlichen Systemen, nämlich statischen Fuzzy-Systemen mit linearen Dynamik-Regelglieder-Systemen zugrunde liegt. Besonders nachteilig ist es, daß das gezielte Einbringen von Nichtlinearitäten gar nicht oder nicht ohne erheblichen Aufwand möglich ist, da insbesondere Kenntnisse der Kennfeldregelung oder sonstige Zusatzkenntnisse erforderlich sind. Die Beeinflussung und Modifizierung der Regeleigenschaften ist dadurch sehr aufwendig oder überhaupt nicht realisierbar. Des weiteren sind hiermit bestimmte, in der Regelungstechnik erwünschte Reglereigenschaften nicht realisierbar, wie insbesondere eine nichtlineare, begrenzte Integrations-Regelcharakteristik, wie beispielsweise die sogenannte 'Anti-Wind-Up'-Regelcharakteristik.

Aus dem Dokument WO 96/31304 und aus 'Breakout Prediction for Continuous Casting by Fuzzy Mealy Automata', Proceedings of the 3rd European Congress of Intelligent Techniques and Soft Computing EUFIT, Aachen, 29.-31 August 1995, Seiten 754 bis 759, J. Adamy, ist ein als Fuzzy-Automat bezeichnetes, dynamische Fuzzy-System zur Durchbruch-Früherkennung beim Stranggießen bekannt.

Aus der US 5,272,621 ist ein Verfahren und eine Vorrichtung zur Steuerung eines Prozesses mit Totzeit bekannt. Das Verfahren beinhaltet eine Auswertung von Eingangssignalen in der Weise, daß Prozeß-Ausgangsantworten in Relation zu bekannten Eingangsinformationen gesetzt werden. Die Eingangs-Auswertekriterien sind dabei in einer oder mehreren der Integrator-, Proportional- und Differenzial-Prozeßantworten repräsentiert.

Aus der DE 44 20 800 A1 ist ein Fuzzy-PID-Regler bekannt, bei dem zur Verkürzung der bei der Ermittlung der Stellgröße benötigten Rechenzeit durch Einschränkung der verwendeten Zugehörigkeitsfunktionen die Regelmenge auf zwei Regeln minimiert wird, wobei die Fuzzyfizierungs, in Differenz- und Defuzzyfizierungsmethoden frei wählbar sind.

Aufgabe der Erfindung ist es, einen Regler mit Fuzzy-Eigenschaften so zu verbessern, daß die Regelvorgänge, insbesondere die Integrations- und Differentiationsvorgänge, einfacher beeinflußbar und modifizierbar sind.

Die Aufgabe wird gelöst mit dem im Anspruch 1 angegebenen, erfindungsgemäßen Regler.

Vorteil des erfindungsgemäßen Reglers ist es, daß die Eigenschaften statischer Fuzzy-Systeme und herkömmlicher, linearer dynamischer Regelglieder in Form von zeitdiskreten, dynamischen Fuzzy-Regelgliedern zusammengeführt sind. Der Regler ist somit vorteilhaft ausschließlich mit Regelgliedern aufbaubar, welche jeweils systematisch dynamische Fuzzy-Eigenschaften aufweisen.

Des weiteren vorteilhaft ist es, daß der erfindungsgemäße Regler vollständig mit Standard Fuzzy-Reglersoftware programmierbar und parametrierbar ist. Beispielsweise ist der erfindungsgemäße Regler somit vorteilhaft in Software- und/oder Hardwareform realisierbar.

Besonders vorteilhaft ist es, daß die Übertragungseigenschaften der Fuzzy-Regelglieder gezielt und anschaulich modifizierbar sind. Ausgehend von Fuzzy-Regelgliedern mit einer zunächst insbesondere annähernd linearen Reglercharakteristik sind vorteilhaft gezielt gewünschte Regler-Nichtlinearitäten einbringbar. Beispielsweise ist in dem erfindungsgemäßen Regler auf einfachste Weise eine bestimmte Reglercharakteristik implementierbar, welche insbesondere durch in den Fuzzy-Regelgliedern vorliegende linguistische Regeln, d.h. der Fuzzy-Regeln der Fuzzy-Folgerungen gezielt definierbar, also 'designbar' ist.

Vorteilhaft liegen die zeitdiskreten, dynamischen Fuzzy-Regelglieder des erfindungsgemäßen Reglers insbesondere in Form sogenannter Fuzzy-Automaten vor. Diese weisen innere Zustandsgrößen auf, welche auf Grund von Fuzzy-Folgerungen aktualisiert werden. Die Ausgangsgröße wird ebenfalls auf Grund von Fuzzy-Folgerungen derartig erzeugt, daß das Fuzzy-Regelglied die vorgesehene Übertragungscharakteristik, insbesondere zumindest eine integrierende und/oder eine differenzierende Übertragungscharakteristik aufweist.

Ein weiterer Vorteil ist es, daß innere Zustandsgrößen der Fuzzy-Regelglieder des erfindungsgemäßen Reglers insbesondere durch eine Folge von inneren Bearbeitungszuständen gebildet werden, wobei das Fuzzy-Regelglied bei einer Aktualisierung der inneren Zustandsgröße von einem bisherigen Bearbeitungszustand zeitdiskret in einen folgenden Bearbeitungszustand übergeht. Die Zustandsgrößen sind vorteilhaft mittels eines Zustandsgraphen graphisch anschaulich darstellbar.

Vorteilhaft dient der erfindungsgemäße Regler zur Regelung eines technischen Prozesses.

Weitere vorteilhafte Ausführungsformen der Erfindung sind in den entsprechenden Unteransprüchen angegeben.

Die Erfindung wird des weiteren anhand der in den nachfolgend kurz angeführten und teilweise bereits oben erläuterten Figuren dargestellten Ausführungsbeispiele weiter erläutert. Dabei zeigt beispielhaft:
- FIG 1: einen bekannten Regler mit Fuzzy-Eigenschaften, welcher ein herkömmliches statisches Fuzzy-System aufweist, welchem drei lineare Dynamik-Regelglieder mit einer integrierenden, differenzierenden bzw. proportionalen Übertragungscharakteristik vorgeschaltet sind,
- FIG 2: eine Ausführungsform des bekannten und bereits in der Figur 1 dargestellten Reglers mit dem herkömmlichen statischen Fuzzy-System nachgeschalteten linearen Dynamik-Regelgliedern,
- FIG 3: einen erfindungsgemäßen Regler mit einem zeitdiskreten, dynamischen Fuzzy-Regelglied,
- FIG 4: einen erfindungsgemäßen Regler mit drei parallel geschalteten zeitdiskreten, dynamischen Fuzzy-Regelgliedern,
- FIG 5: eine bevorzugte Ausführungsform des erfindungsgemäßen Reglers gemäß der Figur 4, wobei ein sogenannter PID-Regler gebildet wird, welcher eine integrierenddifferenzierend-proportionale Übertragungscharakteristik aufweist,
- FIG 6: eine Ausführungsform des erfindungsgemäßen Reglers gemäß der Figur 5, wobei die Fuzzy-Regelglieder mit integrierender und differenzierender Übertragungscharakteristik in einem Fuzzy-Regelglied zusammengefaßt sind,
- FIG 7a: die innere Struktur einer allgemeinen Ausführungsform eines zeitdiskreten, dynamischen Fuzzy-Regelglieds, welches eine erste und zweite statische Fuzzyeinrichtung und eine Speichereinrichtung für die innere Zustandsgröße aufweist,
- FIG 7b: die innere Struktur einer bevorzugten Ausführungsform der ersten statischen Fuzzyeinrichtung eines zeitdiskreten, dynamischen Fuzzy-Regelglieds,
- FIG 7c: die innere Struktur einer bevorzugten Ausführungsform der zweiten statischen Fuzzyeinrichtung eines zeitdiskreten, dynamischen Fuzzy-Regelglieds,
- FIG 8: einen Zustandsgraphen eines zeitdiskreten, dynamischen Fuzzy-Regelglieds mit integrierender Übertragungscharakteristik,
- FIG 9: einen Zustandsgraphen eines zeitdiskreten, dynamischen Fuzzy-Regelglieds mit differenzierender Übertragungscharakteristik,
- FIG 10: ein beispielhaftes Diagramm zur Darstellung der Eingangs- und Ausgangsgröße des in der Figur 8 dargestellten zeitdiskreten, dynamischen Fuzzy-Regelglieds mit integrierender Übertragungscharakteristik für den Spezialfall einer linear ausgelegten Übertragungscharakteristik,
- FIG 11: ein beispielhaftes Diagramm zur Darstellung der Eingangs- und Ausgangsgröße des in der Figur 9 dargestellten zeitdiskreten, dynamischen Fuzzy-Regelglieds mit differenzierender Übertragungscharakteristik für den Spezialfall einer linear ausgelegten Übertragungscharakteristik,,
- FIG 12a: einen Zustandsgraphen eines ersten zeitdiskreten, dynamischen Fuzzy-Regelglieds mit integrierender Übertragungscharakteristik, welches durch gezieltes Einbringen von Nichtlinearitäten als sogenanntes 'AntiWind-Up'-Regelglied modifiziert ist,
- FIG 12b: einen Zustandsgraphen eines ersten, als sogenanntes 'Anti-Wind-Up'-Regelglied modifizierten Fuzzy-Regelglieds, und
- FIG 13: einen Zustandsgraphen eines zeitdiskreten, dynamischen Fuzzy-Regelglieds mit differenzierender Übertragungscharakteristik, wobei im Bearbeitungszustand Z kleine Eingabegrößen nicht auf die Ausgangsgröße wirken.

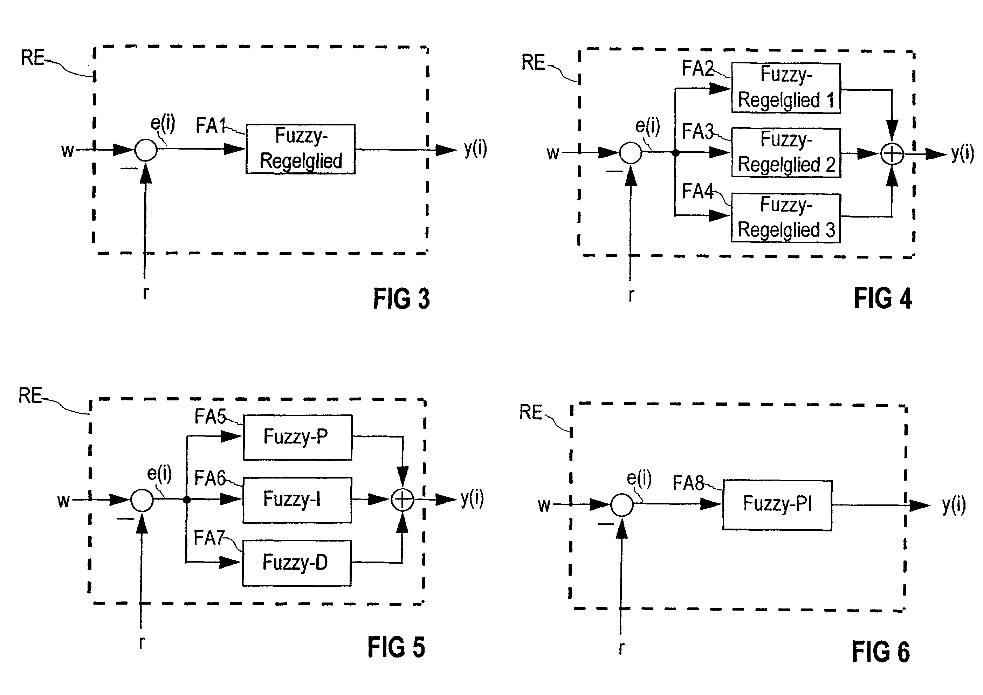

In der Figur 3 ist beispielhaft die Struktur eines erfindungsgemäßen Reglers RE mit wenigstens einem Regelglied FA1 dargestellt. Das Regelglied FA1 weist insbesondere zumindest eine integrierende und/oder differenzierende Übertragungscharakteristik auf. Gemäß der Erfindung ist das Regelglied FA1 als ein zeitdiskretes, dynamisches Fuzzy-Regelglied aufgebaut. Der erfindungsgemäße Regler RE ist dabei nicht auf ein einziges zeitdiskretes, dynamisches Fuzzy-Regelglied beschränkt, sondern kann auch beliebige Verschaltungen von mehreren Fuzzy-Regelgliedern aufweisen. Insbesondere kann der erfindungsgemäße Regler RE auch zusätzlich eine Kombination von zeitdiskreten, dynamischen Fuzzy-Regelgliedern mit herkömmlichen, linearen Dynamik-Regelgliedern aufweisen.

Wie in der Figur 4 dargestellt ist, weist der erfindungsgemäße Regler RE insbesondere auch mehrere zeitdiskrete, dynamische Fuzzy-Regelglieder auf, beispielsweise drei parallel angeordnete zeitdiskrete, dynamische Fuzzy-Regelglieder FA2, FA3 und FA4. Vorteilhaft ist die Gesamt-Übertragungscharakteristik auf die einzelnen Fuzzy-Regelglieder FA2 bis FA4 aufgeteilt, wobei jedes Fuzzy-Regelglied FA2 bis FA4 eine bestimmte Komponente der Gesamt-Übertragungscharakteristik bewirkt.

In Figur 5 ist eine bevorzugte Ausführungsform des erfindungsgemäßen Reglers RE dargestellt, welcher beispielsweise durch die drei parallel angeordneten zeitdiskreten, dynamischen Fuzzy-Regelglieder FA5, FA6 und FA7 eine integrierenddifferenzierend-proportionale Übertragungscharakteristik aufweist. Dabei weist beispielsweise das Fuzzy-Regelglied FA5 ein proportionales, das Fuzzy-Regelglied FA6 eine integrierende und das Fuzzy-Regelglied FA7 eine differenzierende Übertragungscharakteristik auf. Der in Figur 5 dargestellte Regler RE entspricht somit einem sogenannten PID-Regler mit Fuzzy-Eigenschaften.

In der Figur 6 ist des weiteren beispielhaft ein erfindungsgemäßer Regler RE mit einem zeitdiskreten, dynamischen Fuzzy-Regelglied FA8 dargestellt, welches eine integrierend-proportionale Übertragungscharakteristik aufweist. Der in Figur 6 dargestellte Regler RE entspricht somit einem sogenannten PI-Regler mit Fuzzy-Eigenschaften.

Dem in den Figuren 3 bis 6 dargestellten erfindungsgemäßen Regler RE mit dessen beispielhaft aufgeführten Ausführungsformen sind insbesondere eine auch als Regelsollwert bezeichnete Führungsgröße w und eine insbesondere auch als Regelistwert bezeichnete Rückführgröße r zugeführt. Die aus Führungsgröße w und Rückführgröße r gebildete Regeldifferenz ist den zeitdiskreten, dynamischen Fuzzy-Regelgliedern FA1, FA2 bis FA4, FA5 bis FA7, bzw. FA8 als Eingangsgröße e(i) = w-r zugeführt. Die Ausgänge der jeweiligen Fuzzy-Regelglieder FA1, FA2 bis FA4, FA5 bis FA7, bzw. FA8 sind insbesondere im Regler RE zur Ausgangsgröße y(i) zusammengeführt, beispielsweise durch eine direkte Addition oder eine gewichtete Addition.

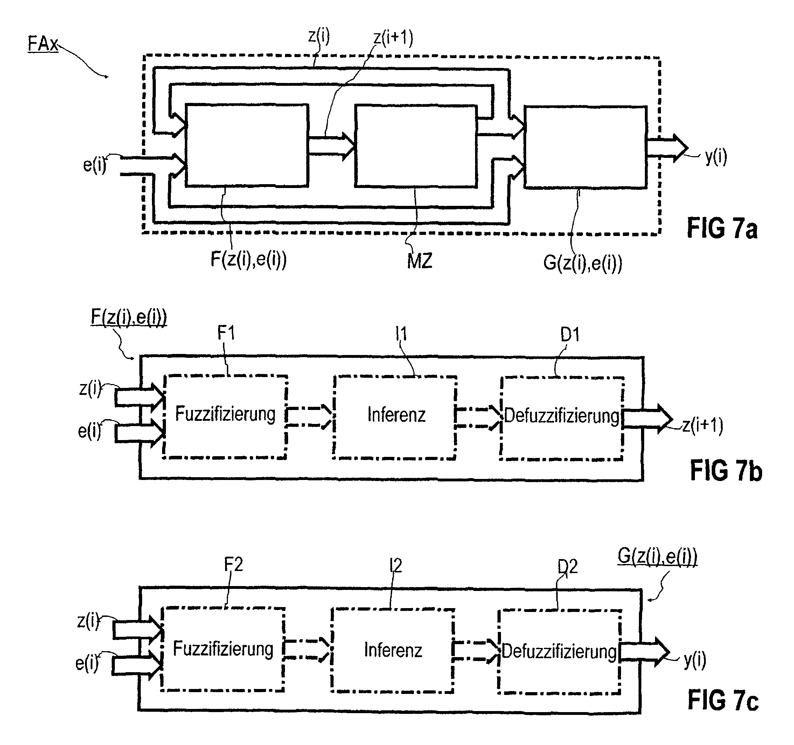

In Figur 7a ist beispielhaft die innere Struktur eines zeitdiskreten, dynamischen Fuzzy-Regelglieds FAx dargestellt, welches eine allgemeine Ausführungsform der in den Figuren 3 bis 6 dargestellten Fuzzy-Regelglieder FA1, FA2 bis FA4, FA5 bis FA7 und FA8 beschreibt. Das Fuzzy-Regelglied FAx weist dabei mit Bezug auf die Figuren 3 bis 6 die Eingangsgröße e(i) und die Ausgangsgröße y(i) auf. Eingangs- und Ausgangsgröße e(i) bzw. y(i) können insbesondere Vektorgrößen sein, d.h. Eingangs- und Ausgangsgröße e(i) bzw. y(i) können auch in Form mehrerer Eingangs- bzw. Ausgangswerte vorliegen. Gemäß einer bevorzugten Ausführungsform der Erfindung aktualisiert das Fuzzy-Regelglied aus der Eingangsgröße e(i) und aus einer inneren Zustandsgröße z(i) auf der Grundlage von Fuzzy-Folgerungen die innere Zustandsgröße z(i) derartig,daß das Fuzzy-Regelglied FAx zumindest eine integrierende und/oder eine differenzierende, insbesondere nichtlineare Übertragungscharakteristik aufweist. Die aktuelle Zustandsgröße z(i) kann insbesondere eine Vektorgröße sein.

Zur Aktualisierung der inneren Zustandsgröße z(i) des Fuzzy-Regelglieds FAx auf der Grundlage von Fuzzy-Folgerungen weist das Fuzzy-Regelglied FAx des erfindungsgemäßen Reglers RE bevorzugt wenigstens eine erste statische Fuzzyeinrichtung F(z(i),e(i)) auf. Diese erzeugt aus der Eingangsgröße e(i) und der aktuellen inneren Zustandsgröße z(i) die der zeitlich auf diese folgende, innere Zustandsgröße z(i+1). Zeitdiskret geht das Fuzzy-Regelglied FAx von der aktuellen inneren Zustandsgröße z(i) in die folgende, innere Zustandsgröße z(i+1) über. Beispielsweise liegt eine durch ein Taktsignal vorgegebenen Taktrate vor, mit der das Fuzzy-Regelglied FAx die innere Zustandsgröße z(i) aktualisiert.

Des weiteren weist das Fuzzy-Regelglied FAx zusätzlich bevorzugt wenigstens eine zweite statische Fuzzyeinrichtung G(z(i),e(i)) auf, um die Ausgangsgröße y(i) des Fuzzy-Regelglieds FAx auf der Grundlage von Fuzzy-Folgerung zu erzeugen. Diese erzeugt aus der Eingangsgröße e(i) und der aktuellen inneren Zustandsgröße z(i) die aktuelle Ausgangsgröße y(i). Sind die erste und zweite Fuzzyeinrichtung F(z(i),e(i)) bzw. G(z(i),e(i)) funktionsgleich, beispielsweise soll die innere Zustandsgröße z(i) den gleichen Wert aufweisen wie die Ausgangsgröße y(i), so ist die zweite Fuzzyeinrichtung G(z(i),e(i)) nicht erforderlich.

Insbesondere weist das in Figur 7a dargestellte Fuzzy-Regelglied FAx eine Speichereinrichtung MZ zur Zwischenspeicherung der aktuellen inneren Zustandsgröße z(i) auf. Durch die Speichereinrichtung MZ wird die aktuelle innere Zustandsgröße z(i) gespeichert und zeitdiskret die von der ersten statischen Fuzzyeinrichtung F(z(i),e(i)) erzeugte folgende, innere Zustandsgröße z(i+1) übernommen.

In den Figuren 7b und 7c ist beispielhaft die erste statische Fuzzyeinrichtung F(z(i),e(i)) bzw. die zweite statische Fuzzyeinrichtung G(z(i),e(i)) dargestellt. Die statischen Fuzzyeinrichtungen F(z(i),e(i)) und G(z(i),e(i)) werden insbesondere deshalb als statisch bezeichnet, weil zeitältere Werte nicht bei der Erzeugung von neuen Werten berücksichtigt werden. Über eine der ersten und zweiten Fuzzyeinrichtung F(z(i),e(i)) bzw. G(z(i), e(i)) in der Regel zugrunde liegende Fuzzifizierungseinheit F1 bzw. F2, eine Inferenzeinheit I1 bzw. I2 und eine Defuzzyfizierungseinheit D1 bzw. D2 werden auf der Grundlage von Fuzzy-Folgerungen die folgende, innere Zustandsgröße z(i+1) bzw. die Ausgangsgröße y(i) erzeugt.

Durch die zeitdiskrete Übernahme der folgenden, inneren Zustandsgröße z(i+1) beispielsweise durch die Speichereinrichtung MZ des dynamischen Fuzzy-Regelglieds FAx, wird der ersten und zweiten statischen Fuzzyeinrichtung F(z(i),e(i)) bzw. G(z(i), e(i)) die neue innere Zustandsgröße z(i+1) als die nunmehr aktuelle, innere Zustandsgröße z(i) zugeführt. Ein derartig aufgebautes Fuzzy-Regelglied FAx wird insbesondere als Fuzzy-Automat bezeichnet.

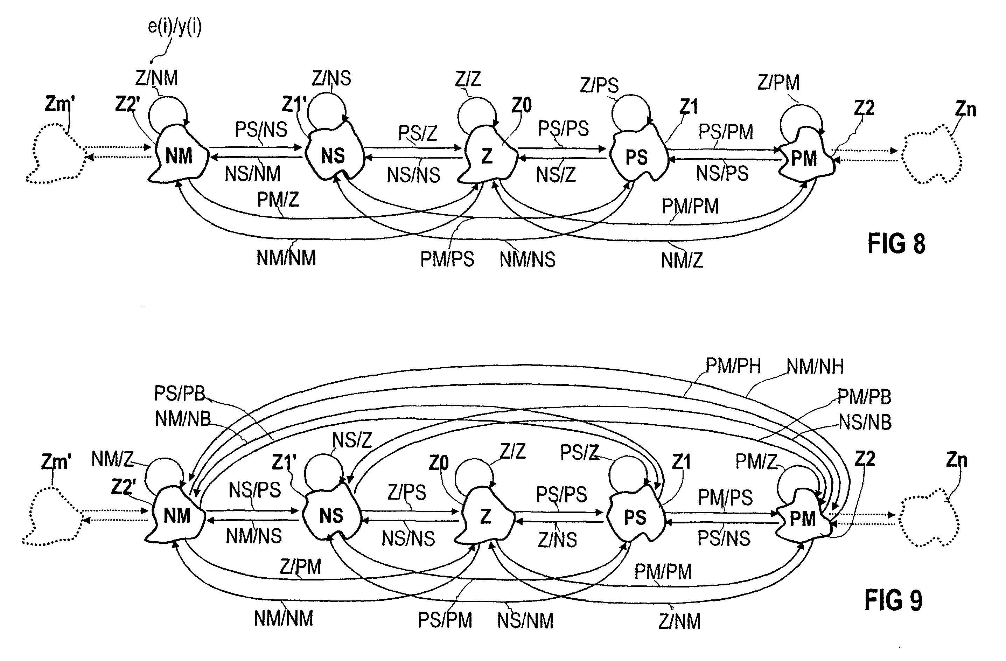

In den Figuren 8 und 9 sind zwei zeitdiskrete, dynamische Fuzzy-Regelglieder FAx beispielhaft anhand von durch die entsprechende Zustandsgröße z(i) einnehmbaren Bearbeitungszuständen Zm' bis Zn beschrieben. Diese weitere Ausführungsform der Erfindung ist anhand von Zustandsgraphen des zeitdiskreten, dynamischen Fuzzy-Regelglieds FAx dargestellt. Der in der Figur 8 dargestellte Zustandsgraph beschreibt ein Fuzzy-Regelglied FAx mit einer integrierenden Übertragungscharakteristik und der in der Figur 9 dargestellte Zustandsgraph beschreibt ein Fuzzy-Regelglied FAx mit einer differenzierenden Übertragungscharakteristik. Dabei wird gemäß der vorteilhaften Ausführungsform der Erfindung die innere Zustandsgröße z(i) des Fuzzy-Regelglieds FAx durch wenigstens eine Folge von Bearbeitungszuständen Zm' bis Z1', Z0, Z1 bis Zn gebildet, wobei das Fuzzy-Regelglied FAx bei einer Aktualisierung der inneren Zustandsgröße z(i) auf der Grundlage von Fuzzy-Folgerungen von einem bisherigen Bearbeitungszustand zeitdiskret in einen folgenden Bearbeitungszustand übergeht.

Die in den Figuren 8 und 9 aufgeführten Beispiele bevorzugter Ausführungsformen der Erfindung sind beispielhaft auf die jeweils fünf fettgedruckt dargestellten Bearbeitungszustände Z2' bis Z2 beschränkt. Die Anzahl der Bearbeitungszustände ist selbstverständlich nicht auf die in den aufgeführten Beispielen beschränkt, sondern ist in beide Richtungen beliebig erweiterbar, wie beispielhaft durch die gestrichelten Bearbeitungszustände Zm' und Zn' angedeutet dargestellt ist.

Jedem der Bearbeitungszustände Z2' bis Z2 ist eine bestimmte Wertigkeit zugeordnet, beispielsweise NM für mittlere negative Werte, NS für kleine negative Werte, Z für Werte, welche annähernd die Größe Null aufweisen, PS für kleine positive Werte oder PM für mittlere positive Werte. Die Pfeile in den Zustandsgraphen geben den Wechsel von einem aktuellen Bearbeitungszustand des Fuzzy-Regelglieds FAx in einen folgenden Bearbeitungszustand an. Den Pfeilen sind Bezugszeichen zugeordnet, welche die Eingangsgröße e(i) und die Ausgangsgröße y(i) angeben. Die Wertigkeiten der Bearbeitungszustände Z2' bis Z2 dienen dabei insbesondere auch als Fuzzy-Werte für die Eingangs- und Ausgangsgröße e(i) bzw. y(i) des Fuzzy-Regelglieds FAx. Die Bezeichnungen erfolgen dabei in Form von Eingangsgröße/Ausgangsgröße e(i)/y(i). Die Wertigkeitszuordnungen für Eingangs- und Ausgangsgröße e(i) bzw. y(i) können aber insbesondere auch unabhängig voneinander und unabhängig von den Wertigkeitszuordnungen der Bearbeitungszustände sein.

Die in den Zustandsdiagrammen dargestellten Pfeile zur Beschreibung der möglichen Übergänge zwischen den Bearbeitungszuständen Z2' bis Z2 und der entsprechenden Ausgangsgrößen y(i) bei bestimmten Eingangsgrößen e(i) dienen insbesondere zur Ableitung von Fuzzy-Folgerungen für das Fuzzy-Regelglied FAx. Auf der Grundlage dieser Fuzzy-Folgerungen wird die innere Zustandsgröße z(i) insbesondere durch die erste statische Fuzzy-Einrichtung F(z(i),e(i)) und die Ausgangsgröße y(i) insbesondere durch die zweite statische Fuzzy-Einrichtung G(z(i),e(i)) gemäß dem Zustandsdiagramm aktualisiert bzw. erzeugt, wie in Figur 7b bzw. 7c beispielhaft dargestellt ist. Beispielsweise sind zwei Fuzzy-Folgerungen: WENN aktueller Bearbeitungszustand PS UND Eingangsgröße mit kleinem positivem Wert PS vorliegt, DANN sind folgender Bearbeitungszustand PM und Ausgangsgröße mittlerer positiver Wert PM.
In den beispielhaften Zustandsgraphen der Figuren 8 und 9 sind die Regeln, d.h. insbesondere die Fuzzy-Folgerungen, wiedergegeben, mit denen das Fuzzy-Regelglied FAx gemäß einer vorteilhaften Ausführungsform aus der Eingangsgröße e(i) und aus dem Bearbeitungszustand Z2' bis Z2 den Bearbeitungszustand Z2' bis Z2 derartig aktualisiert und die Ausgangsgröße y(i) derartig erzeugt, daß das Fuzzy-Regelglied FAx zumindest eine integrierende bzw. eine differenzierende Übertragungscharakteristik aufweist.

Den hier dargestellten vorteilhaften Ausführungsformen liegt bei geeigneter Wahl der den Fuzzy-Folgerungen zugrundeliegenden Zugehörigkeitsfunktionen und der zugrundeliegenden Inferenzgröße zunächst nur eine lineare oder zumindest annähernd lineare Übertragungscharakteristik des Fuzzy-Regelglieds FAx zugrunde. Diese Übertragungscharakteristik bildet eine vorteilhafte Ausgangsbasis für Modifizierungen, beispielsweise in Form von gezieltem Einbringen von Nichtlinearitäten.

Der in der Figur 8 dargestellte Zustandsgraph eines Fuzzy-Regelglieds FAx weist Regeln für Fuzzy-Folgerungen auf, welche eine integrierende Übertragungscharakteristik des Fuzzy-Regelglieds FAx bewirken. Vorteilhaft weisen dabei die Ausgangsgröße y(i) und die aktualisierte innere Zustandsgröße z(i+1), d.h. der folgende Bearbeitungszustand Z2' bis Z2 den gleichen Wert NM, NS, Z, PS oder PM auf.

Beispielsweise bei Eingangsgrößen e(i), welche annähernd den Wert Z aufweisen, verbleibt das Fuzzy-Regelglied FAx im vorherigen Bearbeitungszustand Z2' bis Z2. Bei kleinen positiven Werten PS der Eingangsgröße e(i) geht das Fuzzy-Regelglied FAx in den nächst höheren Bearbeitungszustand über, d.h. beispielsweise von PS nach PM. Bei kleinen negativen Werten NS der Eingangsgröße e(i) geht das Fuzzy-Regelglied FAx in den nächst niedrigeren Bearbeitungszustand über, d.h. beispielsweise von PS nach Z. Bei mittleren positiven Werten PM der Eingangsgröße e(i) geht das Fuzzy-Regelglied FAx insbesondere in den zweitnächst höheren Bearbeitungszustand über, d.h. beispielsweise von Z nach PM. Bei mittleren negativen Werten NM der Eingangsgröße e(i) geht das Fuzzy-Regelglied FAx insbesondere in den zweitnächst niedrigeren Bearbeitungszustand über, d.h. beispielsweise von Z nach NM.

Der in der Figur 9 dargestellte Zustandsgraph eines Fuzzy-Regelglieds FAx weist Regeln für Fuzzy-Folgerungen auf, welche eine differenzierende Übertragungscharakteristik des Fuzzy-Regelglieds FAx bewirken. Vorteilhaft weist dabei der aktualisierte, d.h. folgende Bearbeitungszustand Z2' bis Z2 den gleichen Wert NM bis PM wie die Eingangsgröße e(i) auf, so daß eine Speicherung der Eingangsgröße erfolgt. Die aktualisierte innere Zustandsgröße z(i+1), d.h. insbesondere der folgende Bearbeitungszustand ist somit insbesondere nur von der Eingangsgröße e(i) abhängig, nicht aber vom aktuellen, d.h. derzeitigen Bearbeitungszustand Z2' bis Z2.

Beispielsweise bei Eingangsgrößen e(i), welche den Wert Z aufweisen, geht das Fuzzy-Regelglied FAx in den Bearbeitungszustand Z0 über, dem die Wertigkeit Z zugeordnet ist. Die Ausgangsgröße y(i) ergibt sich aus der aktuellen Eingangsgröße e(i) und dem Wert der vorhergegangenen Eingangsgröße, d.h. dem aktuellen Bearbeitungszustand Z2' bis Z2. Beispielsweise ergibt ausgehend vom aktuellen Bearbeitungszustand Z1', dem der Wert NS zugeordnet ist, eine Eingangsgröße e(i) mit dem Wert Z den folgenden Bearbeitungszustand Z0, dem der Wert Z zugeordnet ist und eine Ausgangsgröße y(i) mit kleinem positivem Wert PS. Des weiteren sind im Beispiel der Figur 9 noch weitere Werte insbesondere für die Ausgangsgröße y(i) aufgeführt, wie beispielsweise PB und NB für große positive bzw. negative Werte und PH und NH für sehr große positive bzw. negative Werte.

Da die in den Figuren 8 und 9 dargestellten Beispiele Zustandsgraphen mit begrenzter Anzahl an Bearbeitungszuständen Z2' bis Z2 beschreiben, liegt jeweils ein oberster Bearbeitungszustand Z2 und ein unterster Bearbeitungszustand Z2' vor. Die durch das Fuzzy-Regelglied FAx einnehmbaren Bearbeitungszustände Z2' bis Z2 und die Ausgangsgröße y(i) sind somit auf einen höchsten bzw. niedrigsten Wert, hier PM bzw. NM beschränkt. Dem Fuzzy-Regelglied FAx ist beispielsweise aber auch eine endlose oder halb offene Folge von Bearbeitungszuständen Zm' bis Zn, d.h. ohne Anzahlsbeschränkung zugrundelegbar.

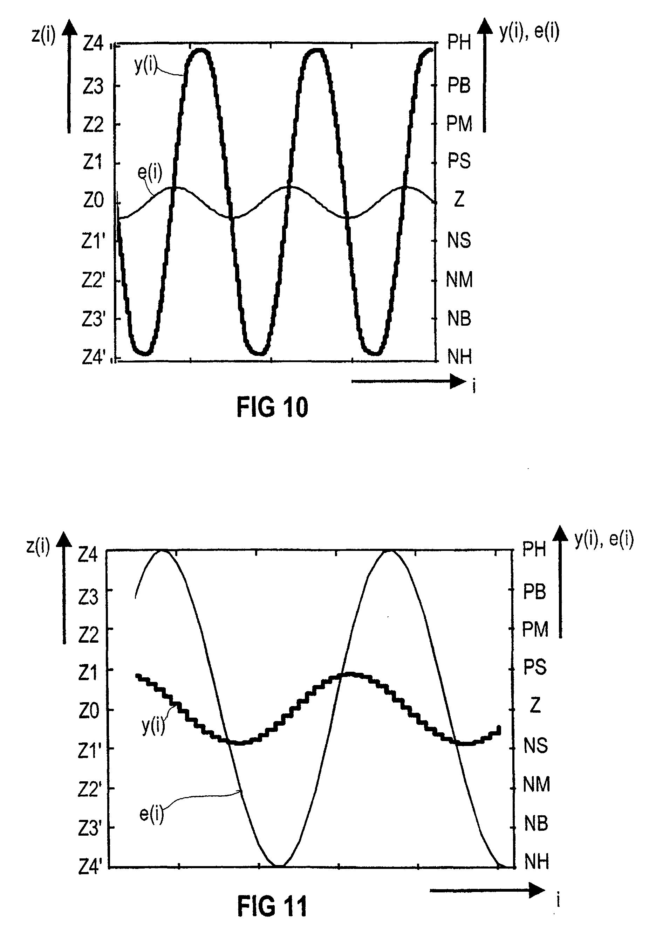

In den Figuren 10 und 11 sind mit Bezug auf die in den Figuren 8 und 9 aufgeführten Ausführungsbeispiele der Erfindung mit integrierender bzw. differenzierender Übertragungscharakteristik jeweils ein Diagramm zur Darstellung der Eingangsund Ausgangsgröße e(i) bzw. y(i) des entsprechenden zeitdiskreten, dynamischen Fuzzy-Regelglieds FAx beispielhaft dargestellt. Hierbei weist das jeweilige Fuzzy-Regelglied FAx zunächst eine nahezu lineare Übertragungscharakteristik auf. Diese nahezu lineare Übertragungscharakteristiken sind durch nachträgliches Einbringen von Nichtlinearitäten gezielt veränderbar, um ein erwünschtes Regelverhalten zu erzielen. Die dünnen durchgezogenen Kurven in den Figuren 10 und 11 stellen die entsprechende Eingangsgröße e(i) dar, welche hier beispielsweise einen sinusförmigen Verlauf aufweisen. Die fettgedruckten, durchgezogenen Kurven stellen die entsprechende Ausgangsgröße y(i) dar, welche die Integral- bzw. Ableitungsfunktion der entsprechenden Eingangsgröße e(i) sind. Da das dynamische Fuzzy-Regelglied FAx gemäß der Erfindung zeitdiskret ist, weist die Ausgangsgröße y(i) einen stufenförmigen Verlauf auf. Die Größe der Stufen ist insbesondere durch die Abtastrate variierbar, d.h. die Taktrate, mit der das zeitdiskrete, dynamische Fuzzy-Regelglied FAx die innere Zustandsgröße z(i) aktualisiert.

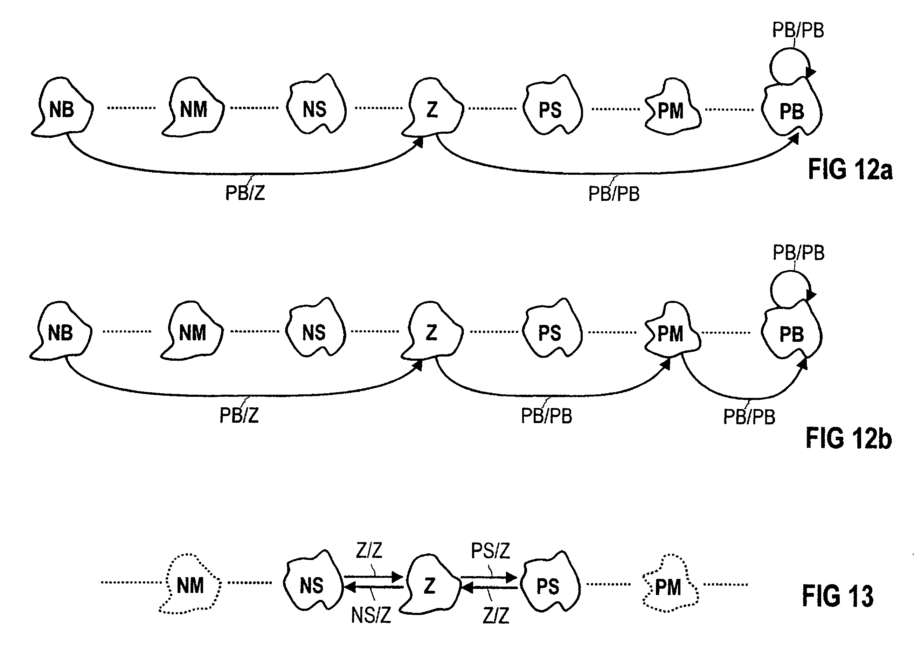

In den Figuren 12a, 12b und 13 ist beispielhaft dargestellt, wie ein erfindungsgemäßer Regler RE durch das gezielte Einbringen von Nichtlinearitäten vorteilhaft modifizierbar ist. Das Abändern der Regeln, d.h. der Fuzzy-Folgerungen, kann insbesondere durch Abändern der Pfeile und der zugehörigen Ausgangsgröße y(i) im Zustandsgraphen erfolgen. Die Darstellungen der Figuren 12a, 12b und 13 sind aus Gründen der Übersichtlichkeit unvollständig dargestellt, d.h. es sind insbesondere nicht alle Übergänge zwischen den Bearbeitungszuständen Z2' bis Z2 dargestellt und dienen lediglich zur Darstellung von Modifizier-Prinzipien, welche insbesondere auf die Ausführungsbeispiele der Figuren 8 und 9 übertragbar sind.

Die in den Figuren 12a und 12b dargestellten Ausführungsbeispiele betreffen die Zustandsgraphen zweier zeitdiskreter, dynamischer Fuzzy-Regelglieder FAx mit integrierender Übertragungscharakteristik, welche als sogenannte 'Anti-Wind-Up'-Regelglieder modifiziert sind. Die Fuzzy-Regelglieder FAx sind dabei auf eine endliche, d.h. begrenzte Anzahl an Bearbeitungszuständen, hier beispielsweise die fünf Bearbeitungszustände Z2' bis Z2 begrenzt, wodurch die äußeren Bearbeitungszustände Z2' und Z2 nicht unter- bzw. überschritten werden können. Das Fuzzy-Regelglied FAx verbleibt dabei im Beispiel der Figur 12a im höchsten Bearbeitungszustand PB, auch wenn als Eingabegröße ein großer positiver Wert PB eingegeben wird, der sonst einen Sprung über drei Zustände bewirkt. Im Beispiel der Figur 12b wird sogar zusätzlich die beim Aktualisieren des Bearbeitungszustands bewirkte Sprungweite bei Annäherung des Sättigungs-Bearbeitungszustands PB von Sprungweite drei, NB nach Z, über zwei, Z nach PM und eins, PM nach PB, zu null, PB nach PB, reduziert, obwohl als Eingangsgröße jeweils ein großer positiver Wert PB vorliegt.

Das in der Figur 13 dargestellte Ausführungsbeispiel betrifft den Zustandsgraphen eines zeitdiskreten, dynamischen Fuzzy-Regelglieds FAx. mit modifizierter, differenzierender Übertragungscharakteristik. Kleine positive und negative Werte PS bzw. NS der Eingangsgröße bewirken dabei zwar einen Übergang des Fuzzy-Regelglieds Fax vom Bearbeitungszustand Z in den entsprechenden folgenen Bearbeitungszustand, beispielsweise von Z nach PS, von Z nach NS oder umgekehrt, die Ausgabegröße ist jedoch für kleine Werte insbesondere auf den Wert Z, d.h. auf null reduziert. Dadurch wird insbesondere die Dämpfung von Rausch- und Störsignalen der Eingangsgröße bewirkt.

## Patentansprüche

1. Regler (RE) mit wenigstens einem Regelglied (FA1..FA8), insbesondere mit zumindest einer integrierenden (FA6, FA8) und/oder differenzierenden (FA7) Übertragungscharakteristik,
**dadurch gekennzeichnet,**
**daß** das Regelglied (FA1..FA8) als ein zeitdiskretes, dynamisches Fuzzy-Regelglied (FAx) aufgebaut ist, das eine Speichereinrichtung (MZ) zur Zwischenspeicherung einer aktuellen inneren Zustandsgröße (z(i)) auf der Grundlage von Fuzzy-Folgerungen (F1, I1, D1, F2, I2, D2) aufweist.

2. Regler (RE) nach Anspruch 1,
**dadurch gekennzeichnet,**
**daß** das Fuzzy-Regelglied (FAx, FA1..FA8) aus einer Eingangsgröße (e(i)) und aus einer inneren Zustandsgröße (z(i)) auf der Grundlage von Fuzzy-Folgerungen (F1, I1, D1 F2, I2, D2) die innere Zustandsgröße (z(i)) derartig aktualisiert (z(i+1), F(z(i), e(i))) und eine Ausgangsgröße (y(i)) derartig erzeugt (G(Z(i), e(i))), daß das Fuzzy-Regelglied (FAx) zumindest eine integrierende und/ oder eine differenzierende, insbesondere nichtlineare Übertragungscharakteristik (e(i), y(i)) aufweist (FIG 7a).

3. Regler (RE) nach einem der Ansprüche 1 oder 2,
**dadurch gekennzeichnet,**
**daß** das Fuzzy-Regelglied (FAx) wenigstens eine erste statische Fuzzyeinrichtung (F(z(i),e(i))) zur Aktualisierung der inneren Zustandsgröße (z(i)) des Fuzzy-Regelglieds (FAx) auf der Grundlage von Fuzzy-Folgerungen aufweist (FIG 7b).

4. Regler (RE) nach einem der Ansprüche 1 bis 3,
**dadurch gekennzeichnet,**
**daß** das Fuzzy-Regelglied (FAx) wenigstens eine zweite statische Fuzzyeinrichtung (G(z(i),e(i))) zur Erzeugung der Ausgangsgröße (y(i)) des Fuzzy-Regelglieds (FAx) auf der Grundlage von Fuzzy-Folgerungen aufweist (FIG 7c).

5. Regler (RE) nach einem der Ansprüche 1 bis 4,
**dadurch gekennzeichnet,**
**daß**
a) die innere Zustandsgröße (z(i)) des Fuzzy-Regelglieds (FAx) durch wenigstens eine Folge von Bearbeitungszuständen (Zm'..Z1', Z0, Z1..Zn) gebildet wird, und
b) das Fuzzy-Regelglied (FAx) bei einer Aktualisierung der inneren Zustandsgröße (z(i)) von einem bisherigen Bearbeitungszustand (Zm'..Zn) zeitdiskret in einen folgenden Bearbeitungszustand (Zm'..Zn) übergeht (FIG 8, FIG 9).

6. Verwendung eines Reglers (RE) nach einem der vorangegangenen Ansprüche zur Regelung eines technischen Prozesses.

## Claims

1. Control unit (RE) having at least one control element (FA1...FA8), in particular having at least one integrating transfer characteristic (FA6, FA8) and/or differentiating transfer characteristic (FA7), **characterised in that** the control element (FA1...FA8) is constructed as a temporally discrete dynamic fuzzy logic control element (FAx), and that the fuzzy logic control element (FAx) has a memory device (MZ) for buffer storage of a current internal state variable (z(i)) on the basis of fuzzy logic conclusions (F1, I1, D1, F2, I2, D2).

2. Control unit (RE) according to Claim 1, **characterised in that** the fuzzy logic control element (FAx, FA1...FA8), from an input variable (e(i)) and from an internal state variable (z(i)) on the basis of fuzzy logic conclusions (F1, I1, D1, F2, I2, D2) updates (z(i+ 1), F(z(i), e(i))) the internal state variable (z(i)) and generates (G(Z(i), e(i))) an output variable (y(i)) such that the fuzzy logic control element (FAx) has at least one integrating and/or differentiating, in particular non-linear transfer characteristic (e(i), y(i)) (Fig. 7a).

3. Control unit (RE) according to one of Claims 1 or 2, **characterised in that** the fuzzy logic control element (FAx) has at least one first static fuzzy logic device (F(z(i), e(i))) for updating the internal state variable (z(i)) of the fuzzy logic control element (FAx) on the basis of fuzzy logic conclusions (Fig. 7b ).

4. Control unit (RE) according to one of Claims 1 to 3, **characterised in that** the fuzzy logic control element (FAx) has at least one second static fuzzy logic device (G(z(i), e(i))) for generating the output variable (y(i)) of the fuzzy logic control element (FAx) on the basis of fuzzy logic conclusion (Fig. 7c).

5. Control unit (RE) according to one of Claims 1 to 4, **characterised in that**
a) the internal state variable (z(i) of the fuzzy logic control element (FAx) is formed by at least one succession of processing states (Zm'...Z1', Z0, Z1..Zn), and
b) the fuzzy logic control element (FAx), when the internal state variable (z(i)) is updated from a previous processing state (Zm'..Zn) changes over in temporally discrete fashion into a subsequent processing state (Zm'...Zn) (Fig. 8, Fig. 9).

6. Use of a control unit (RE) according to one of the preceding claims for regulating a technical process.

## Revendications

1. Régulateur (RE) comportant au moins un élément de régulation (FA1 à FA8), notamment avec au moins une caractéristique de transmission à intégration (FA6, FA8) et/ou à différentiation (FA7),
**caractérisé par le fait que** l'élément de régulation (FA1 à FA8) est construit comme un élément de régulation à logique floue (FAx) dynamique et discret dans le temps qui comporte un dispositif de mémoire (MZ) pour la mémorisation temporaire d'une grandeur d'état interne actuelle (z (i)) sur la base de déductions de logique floue (F1, I1, D1, F2, I2, D2).

2. Régulateur (RE) selon la revendication 1,
**caractérisé par le fait que** l'élément de régulation à logique floue (FAx, FA1 à FA8), à partir d'une grandeur d'entrée (e (i)) et d'une grandeur d'état interne (z (i)) et sur la base de déductions de logique floue (F1, I1, D1, F2, I2, D2), actualise (z (i + 1), F (Z (i), e (i))) la grandeur d'état interne (z(i)) et produit (G (z (i), e (i))) une grandeur de sortie (y (i)) de telle sorte que l'élément de régulation à logique floue (FAx) présente au moins une caractéristique de transmission (e (i), y (i)) à intégration et/ou à différentiation, en particulier non linéaire (figure 7a).

3. Régulateur (RE) selon l'une des revendications 1 ou 2,
**caractérisé par le fait que** l'élément de régulation à logique floue (FAx) présente au moins un premier dispositif à logique floue statique (F (z (i), e (i))) pour l'actualisation de la grandeur d'entrée interne (z (i)) de l'élément de régulation à logique floue (FAx) sur la base de déductions de logique floue (figure 7b).

4. Régulateur (RE) selon l'une des revendications 1 à 3,
**caractérisé par le fait que** l'élément de régulation à logique floue (FAx) comporte au moins un deuxième dispositif à logique floue statique (G (z (i), e (i))) pour la production de la grandeur de sortie (y (i)) de l'élément de régulation à logique floue (FAx) sur la base de déductions de logique floue

5. Régulateur (RE) selon l'une des revendications 1 à 4,
**caractérisé par le fait que**
a) la grandeur d'état interne (z (i)) de l'élément de régulation à logique floue (FAx) est formée par au moins une succession d'états de traitement (Zm' à Z1', Z0 Z1 à Zn), et
b) lors d'une actualisation de la grandeur d'état interne (z (i)), l'élément de régulation à logique floue (FAx) passe de façon discrète dans le temps d'un état de traitement valable jusqu'alors (Zm' à Zn) à un état de traitement suivant (Zm' à Zn) (figure 8, figure 9).

6. Utilisation d'un régulateur (RE) selon l'une des revendications précédentes pour la régulation d'un processus technique.
